(19) **Europäisches Patentamt**

**European Patent Office**

**Office européen des brevets**

(11) **EP 1 357 269 B1**

(12) **EUROPEAN PATENT SPECIFICATION**

(45) Date of publication and mention
of the grant of the patent:
**21.09.2005 Bulletin 2005/38**

(51) Int Cl.⁷: **F01N 3/24**, F01N 3/28,
F01N 3/08

(21) Application number: **03007978.4**

(22) Date of filing: **09.04.2003**

(54) **Exhaust gas purification device**

Vorrichtung zur Abgasreinigung

Dispositif de purification de gaz d'échappement

(84) Designated Contracting States:
**DE FR GB**

(30) Priority: **29.05.2002 JP 2002155198**
**29.05.2002 JP 2002155201**
**24.04.2002 JP 2002122117**

(43) Date of publication of application:
**29.10.2003 Bulletin 2003/44**

(73) Proprietor: **NISSAN MOTOR CO., LTD.**
**Kanagawa-ken (JP)**

(72) Inventors:
• **Ashida, Masaaki**
**Yokohama-shi, Kanagawa 245-0002 (JP)**
• **Mori, Kouichi**
**Ayase-shi, Kanagawa, 252-1127 (JP)**
• **Mitsuishi, Shunichi**
**Isehara-shi, Kanagawa, 259-1116 (JP)**

• **Ugomori, Yoshinao**
**Isehara-shi, Kanagawa 259-1117 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 976 916          WO-A-01/12961**
**US-A- 6 047 544          US-A- 6 113 864**

• **PATENT ABSTRACTS OF JAPAN vol. 2000, no. 02, 29 February 2000 (2000-02-29) & JP 11 324662 A (NISSAN MOTOR CO LTD), 26 November 1999 (1999-11-26)**
• **PATENT ABSTRACTS OF JAPAN vol. 1995, no. 07, 31 August 1995 (1995-08-31) & JP 07 096183 A (HONDA MOTOR CO LTD), 11 April 1995 (1995-04-11)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

This invention relates to an exhaust gas purification device according to the preamble of independent claim 1.

An exhaust gas purification system for an internal combustion engine using a three-way catalyst can not sufficiently oxidize hydrocarbons (HC) discharged during cold engine operation conditions due to the fact that the catalyst has not reached an activation temperature.

JP11-324662 published by the Japanese Patent Office in 1999 discloses an exhaust gas purification device as indicated above wherein an HC trap and a three-way catalyst are disposed in series. The HC trap, when its temperature is low, has a function of temporarily trapping HC in the exhaust gas of an internal combustion engine. Trapped HC is released as the temperature of HC trap rises. HC released from the HC trap is then oxidized by the three-way catalyst and converted into carbon dioxide ($CO_2$) and water vapor ($H_2$). In said prior art device the carriers, which comprise the respective layers, are disposed in series. In particular, the hydrocarbon trapping layers and the three-way catalyst layers are alternatively arranged within the housing, wherein the respective material layers are arranged at some distance from each other, such that the different materials are separated from each other. Accordingly, the reaction area of the respective materials is separated from each other and heat transfer between two different materials is prevented.

However, when HC trapped by the trap is released, the temperature of the three-way catalyst often has not reached an optimal activation temperature even through a partial activation temperature has been reached which results in a certain level of activation. Consequently a portion of the HC released from the HC trap is discharged into the atmosphere without undergoing oxidizing operations in the three-way catalyst.

Further, since the prior art device has an HC trap and a three-way catalyst disposed in series, it is inevitable that the device becomes large in size.

Prior art document US 6,047,544 A teaches some type of exhaust gas purification device with a carrier provided with a first layer that comprises HC absorbent, wherein a catalytic layer is formed on said first layer and said catalytic layer provides a three-way catalyst.

According to the present invention, said objective is solved by an exhaust gas purification device having the features of claim 1.

Preferred embodiments are laid down in the dependent claims.

Hereinafter the present invention will be explained in greater detail in conjunction with the accompanying drawings. In the drawings, wherein,

FIG. 1 is a schematic diagram of an engine to which the present teaching is applied,

FIG. 2 is a longitudinal sectional view of a catalytic converter according to this teaching,

FIG. 3 is an enlarged cross-sectional view of a reaction unit according to this teaching,

FIG. 4 is a schematic longitudinal sectional view of a reaction unit according to a second embodiment,

FIG. 5 is a longitudinal sectional view of a catalytic converter according to a third embodiment,

FIG. 6 is similar to FIG. 3, but shows a fourth embodiment,

FIG. 7 is similar to FIG. 3, but shows a fifth embodiment,

FIG. 8 is similar to FIG. 3, but shows a sixth embodiment,

FIG. 9 is similar to FIG. 3, but shows a seventh embodiment.

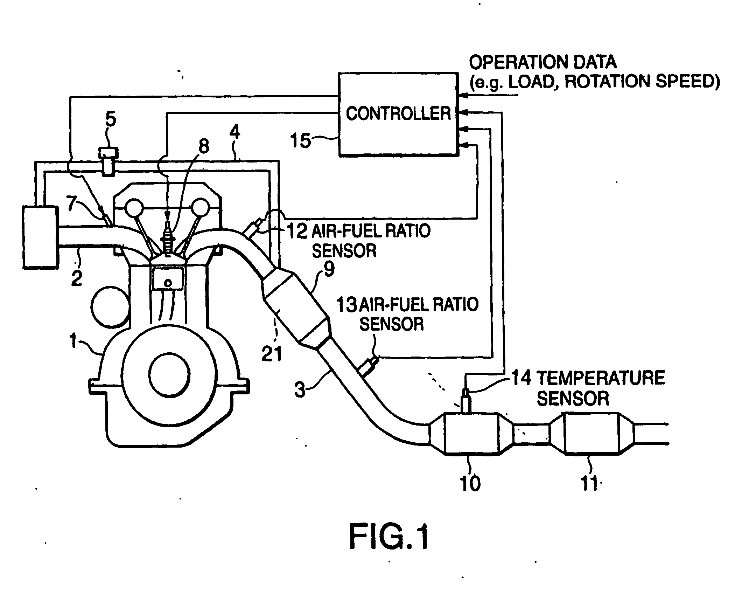

Referring to FIG. 1 of the drawings, an internal combustion engine 1 for a vehicle is provided with an intake passage 2 and an exhaust passage 3. A fuel injector 7 injects fuel into air taken into the engine 1 from the intake passage 2. The resulting gaseous mixture is combusted by igniting the gaseous mixture produced in the engine 1 using a spark plug 8.

The exhaust gas produced by combustion of the gaseous mixture is discharged into the atmosphere from the exhaust passage 3 through catalytic converters 9-11. A portion of the exhaust gas is recirculated to the intake passage 2 through an exhaust gas recirculation passage (EGR passage) 4. An EGR control valve 5 is provided in the EGR passage 4 in order to control the exhaust gas recirculation amount.

The catalytic converters 9-11 comprise an upstream catalytic converter 9, an intermediate catalytic converter 10 and a downstream catalyst converter 11 disposed in series. A reaction unit 21 is provided inside each catalytic converter 9-11. The reaction unit 21 is coated with an HC trapping material such as zeolite and a known three-way catalyst having the function of oxidizing carbon monoxide (CO) and hydrocarbons (HC) and reducing nitrogen oxides (NOx). The internal structure of the catalytic converters 9-11 will be described later.

The fuel injection amount and fuel injection timing of the fuel injector 7 and the ignition timing of the spark plug 8 are controlled by a controller 15.

The controller 15 comprises a microcomputer provided with a central processing unit (CPU), a read-only memory (ROM), a random access memory (RAM) and an input/output interface (I/O interface). The controller 15 may comprise a plurality of microcomputers.

In order to perform the above control, an air-fuel ratio sensor 12, 13 is provided to detect the air-fuel ratio of the gaseous mixture burnt in the engine 1 from the concentration of oxygen in the exhaust gas in the exhaust passage 3 upstream and downstream of the upstream catalytic converter 9. A temperature sensor 14 is provided to detect the catalyst temperature in the intermediate catalytic converter 10. Detection signals from these sensors are input as signal data to the controller 15.

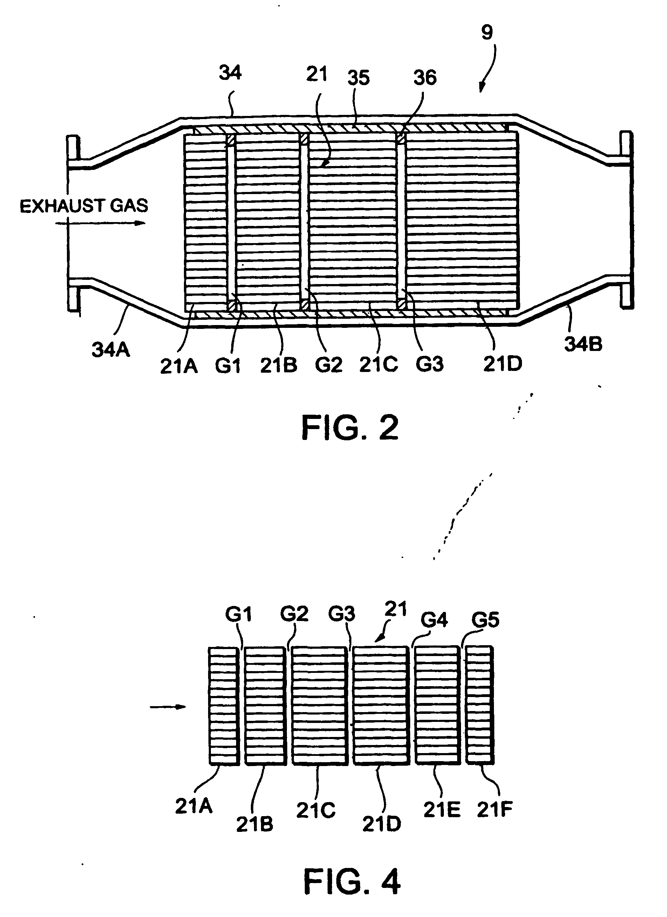

Referring to FIG. 2, the catalytic converter 9 is provided with a cylindrical housing 34 having an inlet 34A and an outlet 34B and the reaction unit 21 supported on the inner side of the housing 34 by a sleeve-shaped thermal resistant mat 35. The thermal resistant mat 35 is made from ceramic fiber or alumina fiber for example.

The reaction unit 21 comprises four ceramic carriers 21A-21D disposed in series with respect to the flow of exhaust gas. Among the carriers 21A-21D, a carrier located upstream has a shorter length in the direction of the flow of exhaust gas than a carrier located downstream. The carriers 21A-21D are separated by gaps G1-G3. The dimensions of the gaps G1-G3 in the direction of the flow of exhaust gas are identical.

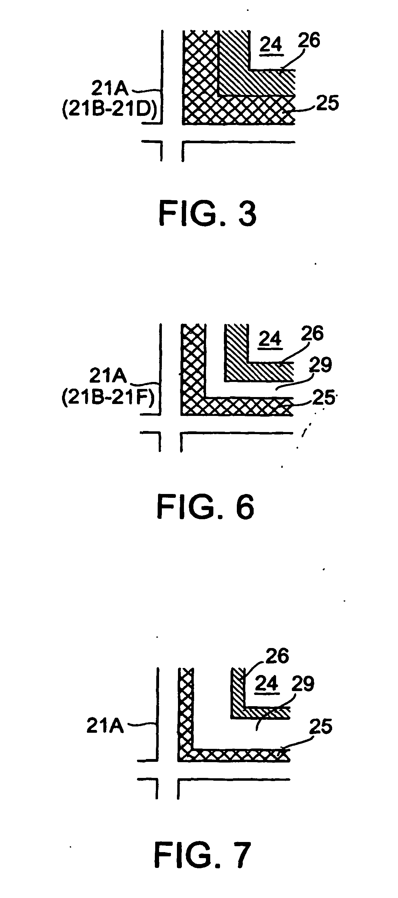

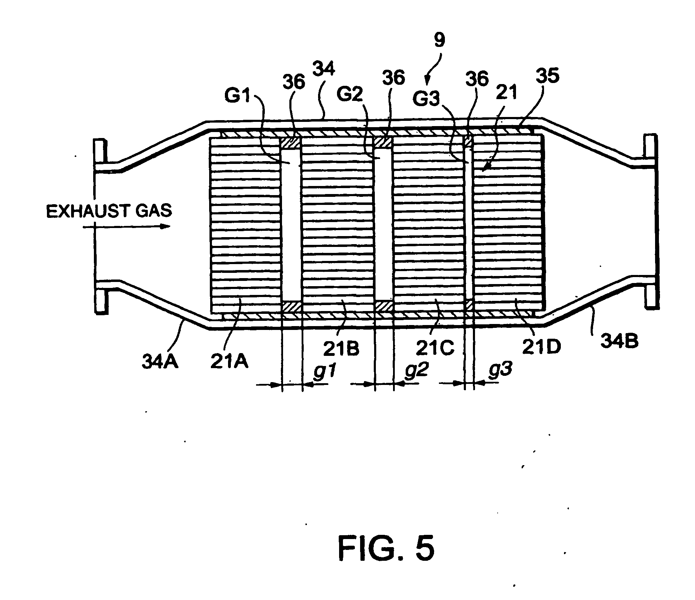

Referring to FIG. 3, each carrier 21A-21D has a lattice-shaped cross-sectional face and the space surrounded by the lattice forms a passage 24 of exhaust gas. Each carrier 21A-21D has a number of such passages 24 having rectangular cross-sections and passing through the carrier 21A-21D. A carrier having this type of cross-sectional shape is termed a honeycomb carrier.

On the surface of the carrier 21A-21D, an HC trap layer 25 comprising HC trapping material such as zeolite is coated. On the HC trap layer 25, a three-way catalyst layer 26 comprising precious metal catalysts such as platinum (Pt), rhodium (Rh) and palladium (Pd) is coated so as to face the flow of exhaust gas in the passages 24.

Each carrier 21A-21D is supported to the housing 34 via the thermal resistant mat 35. Outer periphery of the each gap G1-G3 is filled with a plug 36 made of a material that has the same coefficient of linear expansion as the carriers 21A-21D. The plug 36 functions to maintain the constant dimensions of the gaps G1-G3 as well as to protect the thermal resistant mat 35 from erosion as a result of exposure to the exhaust gas in the gaps G1-G3.

By using a material that has the same coefficient of linear expansion as the carriers 21A-21D for the plug 36, the strain that may appear when the reaction unit 21 is heated is reduced, so the structural stability of the reaction unit 21 is enhanced.

In this embodiment, although only the catalytic converter 9 which undergoes the highest temperatures is formed as described above, all the catalytic converters 9-11 may be formed in the above manner.

During the cold start of the engine 1, due to unburnt fuel mixture or incomplete combustion of fuel, a large amount of HC is discharged into the exhaust passage 3 in comparison with the amount discharged during operation at a stable idle rotation speed. Most of HC discharged to the exhaust passage 3 is trapped by the HC trapping layer 25 in the upstream catalytic converter 9.

When the temperature of the trapping layer 25 reaches 150 degrees centigrade (°C), the trapping layer 25 starts to release trapped HC. If the three-way catalyst layer 26 has exceeded a temperature of 300 °C, oxidation reactions on HC start to occur. However the catalytic function of the three-way catalyst is not evident over the entire catalyst surface at a temperature of 300 °C. At this stage the catalytic function is only partially evident. In other words, when the catalytic function of the three-way catalyst 26 is considered, a temperature of 300 °C is a partial activation temperature and the complete activation occurs in regions of higher temperature.

In other words, immediately after the three-way catalyst 26 has reached a temperature of 300 °C, the oxidizing performance of the three-way catalyst 26 with respect to HC is still relatively low. The oxidizing performance of the three-way catalyst 26 with respect to HC increases as the temperature of the three-way catalyst 26 increases further, in other words, it increases with the passage of time.

Therefore, it is preferred that the release of HC from the HC trapping layer 25 is delayed as much as possible from the point of view of ensuring sufficient oxidizing of the HC released from the HC trapping layer 25. On the other hand, it is preferred to increase the temperature of the three-way catalyst layer 26 to the complete activation temperature as rapidly as possible after reaching the partial activation temperature of 300 °C.

The three-way catalyst layer 26 which is formed on the surface of the HC trapping layer 25 mainly increases its temperature as a result of direct contact with high-temperature exhaust gas. Furthermore after initiating catalytic reactions, the heat of reaction increases the rate of change in temperature.

The HC trapping layer 25 positioned in the lower layer mainly undergoes temperature increases as a result of transmission of heat from the upstream HC trapping layer 25.

The gaps G1-G3 separating the carriers 21A-21D from one another interrupt heat transfer between carriers and cause temperature increase in the HC trapping layer 25 to be delayed. With respect to the three-way catalyst layer 26 which increase the temperature by contact with exhaust gas, the gaps G1-G3 do not affect to delay the temperature increase, but rather promote temperature increase of the three-way catalyst layer 26 by lowering the heat capacity thereof.

The gaps G1-G3 causes a turbulence in exhaust gas flowing down in the passages 24 and average out the deviation of the flow of exhaust gas in the radial direction, thereby enhancing HC trapping performance of the HC trapping layer 25.

Accordingly, by forming the reaction unit 21 with the carriers 21A-21D separated by the gaps G1-G3, the HC trapping performance of the HC trapping layer 25 as well as HC oxidation performance of the three-way catalyst layer 26 are enhanced compared with the case where the reaction unit is formed of a single carrier. Therefore, purification of HC discharged from the engine during cold start is effectively performed by the catalytic converter 9. It is also possible to make the size of the catalytic converter 9 smaller as a result of enhance HC purification performance.

The arrangement that a carrier located upstream has a shorter length in the direction of the flow of exhaust gas than a carrier located downstream has the following effect. Specifically, the temperature of exhaust gas in the catalytic converter 9 is higher in the vicinity of the inlet 34A than in other part. By making the dimension of an upstream carrier in the direction of exhaust flow shorter, the heat transfer interruption and turbulence formation occur at a position closer to the inlet 34 than in the case where all the carriers 21A-21D have same dimensions.

As a result, the HC trapping performance and the oxidation performance of the released HC are enhanced. According to this arrangement of dimensions of the carriers 21A-21D in the direction of exhaust gas flow, the heat capacity of an upstream carrier is smaller, which accelerates the activation of the three-way catalyst layer 26 of the upstream carrier.

It is also possible to accelerate the activation of the three-way catalyst layer 26 of the upstream carrier by reducing the number of passages 24 or so-called cells of the upstream carrier, or by reducing the thickness of the HC trapping layer 25 so as to reduce the total heat capacity of the carrier and the layers coated thereon.

It is advantageous to increase the number of carriers from the point of view of suppressing transfer of heat in the HC trapping layer 25 and increasing the turbulence in the flow of the exhaust gas.

Even when the carriers 21A-21D are formed from a metallic material, it is possible to obtain an appropriate level of suppressing heat transfer by providing a gap between two carriers. However, the effect of the gaps according to this teaching is more significant when they are provided in ceramic carriers that have a lower heat transfer rate. Ceramics display an affinity for HC trapping materials such as zeolite and have the advantage that the strength of layers formed by coating is higher than in the case when they are formed on the surface of metal carrier.

The HC trapping amount of the HC trapping layer 25 depends on the coating amount of the HC trapping material on the carrier 21A (21B-21D). When a large amount of trapping material is coated on the carrier 21A (21B-21D), the cross-sectional area of the passage 24 is reduced and the flow resistance on the exhaust gas increases.

However, if the HC trapping performance of the HC trapping layer 25 is improved by the aforesaid turbulence promotion effect and heat transfer interruption effect of the gaps G1-G3, it is possible to suppress the flow resistance on the exhaust gas at a low level, because the coating amount of HC trapping material, i.e., the thickness of HC trapping layer 25 can be maintained to a small amount.

More precisely, the cell density of the carrier is generally 900 nos. per square inch. The reaction unit 21 according to this teaching allows a reduction to 600 nos. per square inch or even to 300 nos. per square inch as a result of the above effect.

With respect to a cell density of 300 nos. per square inch, the amount of HC trapping material coated on the carrier 21A (21B-21D) is preferably 350 grams per cubic foot in gross (apparent) volume of the carrier 21A (21B-21D). With respect to a cell density of 600 nos. per square inch, the amount of trapping material coated on the carrier 21A (21B-21D) is preferably 250 grams per cubic foot in gross (apparent) volume of carrier 21A (21B-21D).

Next, referring to FIG. 4, a second embodiment will be described.

A reaction unit 21 according to this embodiment comprises six carriers 21A-21F separated by gaps G1-G5. The dimensions in the direction of exhaust gas flow of the carrier 21A disposed in the most upstream position and the carrier 21F disposed in the most downstream position are the minimum among others. The dimensions in the direction of exhaust gas flow of a carrier becomes larger as the location of the carrier shifts to the mid portion of the catalytic converter 9. In other words, the carrier 21B has a larger dimension in the direction of exhaust gas flow than the carrier 21A. The carrier 21C has a larger dimension in the direction of exhaust gas flow than the carrier 21B. The carrier 21E has a larger dimension in the direction of exhaust gas flow than the carrier 21F. The carrier 21D has a larger dimension in the direction of exhaust gas flow than the carrier 21E.

According to this setting of dimensions of the carriers 21A-21F, the carrier 21F in the most downstream position has the least heat capacity. Since the temperature of exhaust gas in the catalytic converter 9 becomes lower as it approaches downstream, reduction in the heat capacity of the carrier 21F disposed in the most downstream position has an effect to promote temperature increase in the three-way catalyst layer 26 of the carrier 21F which is the latest in the temperature increase among the three-way catalyst layers 26 of the carriers 21A-21F.

Acceleration of the activation of the three-way catalyst layers 26 can also be realized by reduction of cell numbers or reduction of the thickness of the HC trapping layer 25 as described hereintofore.

Next, referring to FIG. 5, a third embodiment will be described.

A reaction unit 21 according to this embodiment is provided with four separated carriers 21A-21D as in the case of the first embodiment. In this embodiment, the dimensions of the carriers 21A-21D in the direction of exhaust gas flow are identical, but those of the gaps G1-G3 are set to be larger as the location shifts to upstream. More specifically, dimensions *g1-g3* of the gaps G1-G3 in the direction of exhaust gas flow have the following relation:

$$g1>g2>g3$$

The construction of the reaction unit 21 in the other part is identical to the reaction unit 21 of the first embodiment.
According to this embodiment, the heat transfer interrupting effect and turbulence promotion effect of an upstream gap is more significant than those of a downstream gap. In the catalytic converter 9, since the temperature is higher as the distance from the inlet 34A is smaller, such an arrangement of the dimensions *g1-g3* of the gaps' G1-G3, the temperature increase in the entire reaction unit 21 is efficiently suppressed.

Further, since a homogenized flow of exhaust gas is promoted at a position near to the inlet 34A also by this arrangement, a high HC trapping performance is obtained over the entire reaction unit 21. This embodiment can be applied to any catalytic converter provided with more than three carriers.

In any of the above embodiments, with respect to downstream carriers such as the carrier 21D of the first and third embodiments, and the carriers 21E and 21F of the second embodiment, it is preferable to increase the amount of HC trapping material of the HC trapping layer 25 or the amount of precious metal of the three-way catalyst layer 26 compared with the other carriers.

In the catalytic converter 9 according to the first-third embodiments, temperature increase of the carriers located downstream are specifically suppressed due to the gaps G1-G3 (G1-G5). Increasing the amount of HC trapping material used in these carriers increases the HC trapping amount of these carriers and retards the release timing of the trapped HC so as to match the full-activation timing of the three-way catalyst layer 26. Increasing the amount of HC trapping material for the carrier also results in the increase of the heat capacity of the carrier, which may result in a retard in the activation of the three-way catalyst layer 26. Increasing the amount of precious metal of the catalyst layer 26 however compensates for this adverse effect.

Next, referring to FIGs. 6-9, a fourth-seventh embodiments related to a variation in the thickness of the HC trapping layer 25 and in the thickness of the three-way catalyst layer 26 will be described. It should be noted that any of the fourth-seventh embodiments can be combined with any of the first -third embodiments.

A reaction unit 21 shown in FIG. 6 according to the fourth embodiment has a heat insulation layer 29 between the HC trapping layer 25 and the three-way catalyst layer 26. The heat insulation layer 29 comprises a coat of alumina. The heat insulation layer 29 has an effect of interrupting heat transfer from the three-way catalyst layer 26 to the HC trapping layer 25. According to this embodiment, therefore, an early activation of the three-way catalytic layer 26 can be achieved while maintaining HC trapping performance of the HC trapping layer 25. The thickness of the heat insulation layer 29 according to this embodiment is set to be constant over the entire reaction unit 21.

In a reaction unit 21 shown in FIG. 7 according to the fifth embodiment, the thickness of the heat insulation layer 29 is set to vary. It is thicker in the carrier located upstream than the carrier located downstream. In the catalytic converter 9 according to the first and second embodiments, which is provided with the carriers 21A-21D (21A-21F) separated by the gaps G1-G3 (G1-G5), a carrier located in the upstream position increases its temperature earlier than a carrier located in the downstream position. Making the thickness of the heat insulation layer 29 of the upstream carrier larger than that of the downstream carrier suppresses temperature increase in the upstream carrier, thereby enhancing HC trapping performance of the HC trapping layer 25 of the upstream carrier.

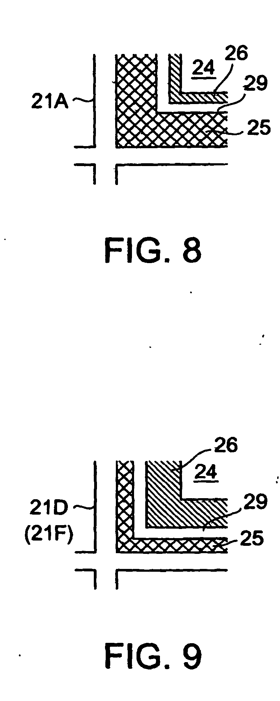

In a reaction unit 21 shown in FIG. 8 according to the sixth embodiment, the relative thickness of the three-way catalyst layer 26 with respect to the thickness of the HC trapping layer 25 is reduced as the location of a carrier shifts to upstream. This arrangement causes the heat capacity of the HC trapping layer 25 of the carrier located upstream to increase, thereby enhancing the HC trapping performance of the HC trapping layer 25 of the carrier.

In a reaction unit 21 shown in FIG. 9 according to the seventh embodiment, the relative thickness of the three-way catalyst layer 26 with respect to the thickness of the HC trapping layer 25 is increased as the location of a carrier shifts to downstream. This arrangement causes the heat capacity of the three-way catalyst layer 26 of the carrier located downstream to decrease, thereby accelerating the activation of the three-way catalyst layer 26 of the carrier. Further, the amount trapped by the HC trapping layer 25 of this carrier is also increased due to a relative increase in the thickness of the HC trapping layer 25 with respect to the thickness of the three-way catalyst layer 26.

In the above fourth-seventh embodiments, it is possible to form the HC trapping layer 25 or the three-way catalyst layer 26 with a plurality of different coats. For example, an upper coat of the three-way catalyst layer 26 comprises any one of palladium/rhodium (Pd/Rh), platinum/rhodium (Pt/Rh) or relatively low density of rhodium (Rd) while a lower coat of the three-way catalyst layer 26 comprises palladium (Pd).

It is known that palladium (Pd) can be activated at lower temperature than platinum (Pt) or rhodium (Rd), but in view of reduction of nitrogen oxides (NOx) at normal operation temperature, platinum (Pt) or rhodium (Rd) shows better performance than palladium (Pd). By applying the above combination to the three-way catalyst layer 26, high HC oxidation performance at low temperature can be achieved while maintaining NOx reduction performance at normal operation temperature.

The drawings for each of the above embodiments have been provided for the purpose of describing the respective characteristics in a graphical manner. Consequently the actual structure is not always shown with respect to dimensions such as the interval or the width of the gaps.

## Claims

1. An exhaust gas purification device (9) interposed in an exhaust passage (3) of an internal combustion engine (1), comprising:

   a housing (34) having an inlet (34A) and an outlet (34B) for exhaust gas, exhaust gas flowing in an exhaust gas flow direction from the inlet (34A) to the outlet (34B) in the housing (34); and
   a plurality of carriers (21A-21F) disposed in series, the carriers (21A-21F) comprise a hydrocarbon trapping layer (25) made from a hydrocarbon trapping material, a three-way catalyst layer (26) containing a precious metal catalyst, and passages (24) of exhaust gas enclosed by the three-way catalyst layer (26),

   **characterized in that**
   said plurality of carriers (21A-21F) is separated by a predetermined gap (G1-G5) in the housing (34) and each of the carriers (21A-21F) comprises the hydrocarbon trapping layer (25) and the three-way catalyst layer (26), wherein said three-way catalyst layer (26) is formed on the hydrocarbon trapping layer (25).

2. An exhaust gas purification device according to claim 1, **characterized in that**, a carrier (21A) located at a nearest position to the inlet (34A) is set to have a smaller dimension in the exhaust gas flow direction than another carrier (21A-21F).

3. An exhaust gas purification device according to claim 1 or 2, **characterized in that** a carrier (21A) located at a nearest position to the inlet (34A) is set to have a smaller heat capacity than another carrier (21B-21F).

4. An exhaust gas purification device according to at least one of the claim 1 to 3, **characterized in that** the device (9) comprises not less than three carriers (21A-21D) separated by gaps (G1-G3), and a gap (G1) located at a position nearest to the inlet (34A) is set to have a larger dimension in the exhaust gas flow direction than another gap (G1-G3).

5. An exhaust gas purification device according to at least one of the claims 1 to 4, **characterized in that** a carrier (21A) located at a position nearest to the inlet (34A) comprises a hydrocarbon trapping layer (25A) which has a larger thickness than a hydrocarbon trapping layer (25A) of another carrier (21B-21F).

6. An exhaust gas purification device according to at least one of the claims 1 to 5, **characterized in that** a carrier (21D, 21F) located at a position nearest to the outlet (34B) comprises a three-way catalyst layer (26) which contains a larger amount of the precious metal catalyst than a three-way catalyst layer (26) of another carrier (21A, 21B, 21C, 21E).

7. An exhaust gas purification device according to at least one of the claims 1 to 6, **characterized in that** each of the carriers (21A-21F) further comprises a heat insulation layer (29) made of a heat insulation material between the hydrocarbon trapping layer (25) and the three-way catalytic layer (26).

8. An exhaust gas purification device according to claim 7, **characterized in that** a carrier (21A) located at a position nearest to the inlet (34A) comprises a heat insulation layer (29) which has a larger thickness than a heat insulation layer (29) of another carrier (21B-21F).

9. An exhaust gas purification device according to at least one of the claims 1 to 8, **characterized in that** a relative thickness of the hydrocarbon trapping layer (25) with respect to a thickness of the three-way catalyst layer (26) is set to increase as a location of a carrier (21A-21F) approaches the inlet (34A).

10. An exhaust gas purification device according to at least one of the claims 1 to 9, **characterized in that** each of the carriers (21A-21F) is made of a ceramic material.

11. An exhaust gas purification device according to at least one of the claims 1 to 10, **characterized in that** the hydrocarbon trapping layer (25) and the three-way catalyst layer (26) are formed by coating.

12. An exhaust gas purification device according to at least one of the claims 1 to 11, **characterized in that** a concentration of passages (24) formed in each of the carriers (21A-21F) is set to not larger than six hundreds per square inch of a cross-sectional area of each carrier (21A-21F).

13. An exhaust gas purification device according to at least one of the claims 1 to 12, **characterized in**

**that** the hydrocarbon trapping layer (25) contains more than 250 grams of the hydrocarbon trapping material per one cubic foot of the carrier (21A-21F) in gross volume.

14. An exhaust gas purification device according to at least one of the claims 1 to 13, **characterized in that** a concentration of the passages (24) formed in a carrier (21A) located at a position nearest to the inlet (34A) is less than a concentration of the passages (24) formed in another carrier (21B-21F).

## Patentansprüche

1. Abgasreinigungsvorrichtung (9), eingesetzt in einen Auslasskanal (3) einer Brennkraftmaschine (1), die aufweist:

    ein Gehäuse (34), das einen Einlass (34A) und einen Auslass (34B) für Abgas hat, wobei das Abgas in einer Abgasströmungsrichtung von dem Einlass (34A) zu dem Auslass (34B) in dem Gehäuse (34) strömt; und
    eine Mehrzahl von Trägem (21A- 21F), angeordnet in Reihe, wobei die Träger (21A- 21F) eine Kohlenwasserstoff- Speicherschicht (25) aufweisen, hergestellt aus einem Kohlenwasserstoff- speichemden Material, einen Drei- Wege- Katalysatorschicht (26), die einen Edelmetallkatalysator enthält und Abgaskanäle (24), umgeben durch die Drei- Wege- Katalysatorschicht (26),

    **dadurch gekennzeichnet, dass**
    die Mehrzahl der Träger (21A-21F) durch einen vorbestimmten Zwischenraum (G1- G5) in dem Gehäuse (34) getrennt ist und jeder der Träger (21A-21F) die Kohlenwasserstoff- Speicherschicht (25) und die Drei- Wege- Katalysatorschicht (26) aufweist, wobei die Drei- Wege- Katalysatorschicht (26) auf der Kohlenwasserstoff- Speicherschicht (25) gebildet ist.

2. Abgasreinigungsvorrichtung nach Anspruch 1, **dadurch gekennzeichnet, dass** ein Träger (21A), angeordnet an einer nächsten Position zu dem Einlass (34A), festgelegt ist, eine kleinere Abmessung in der Richtung der Abgasströmung zu haben, als andere Träger (21A-21F).

3. Abgasreinigungsvorrichtung nach Anspruch 1 oder 2, **dadurch gekennzeichnet, dass** ein Träger (21A), angeordnet an einer nächsten Position zu dem Einlass (34A), festgelegt ist, eine kleinere Wärmekapazität als ein weiterer Träger (21A-21F) zu haben.

4. Abgasreinigungsvorrichtung nach zumindest einem der Ansprüche 1 bis 3, **dadurch gekennzeichnet, dass** die Vorrichtung (9) nicht weniger als drei Träger (21A-21D), getrennt durch Zwischenräume (G1-G3) aufweist, und ein Zwischenraum (G1), angeordnet an einer nächsten Position zu dem Einlass (34A), festgelegt ist, eine größere Abmessung in der Richtung der Abgasströmung zu haben, als der andere Zwischenraum (G1- G3).

5. Abgasreinigungsvonichtung nach zumindest einem der Ansprüche 1 bis 4, **dadurch gekennzeichnet, dass** ein Träger (21A), angeordnet an einer nächsten Position zu dem Einlass (34A), eine Kohlenwasserstoff- Speicherschicht (25) aufweist, die eine größere Dicke hat, als eine Kohlenwasserstoff- Speicherschicht (25) eines weiteren Trägers (21B- 21F).

6. Abgasreinigungsvorrichtung nach zumindest einem der Ansprüche 1 bis 5, **dadurch gekennzeichnet, dass** ein Träger (21D, 21F), angeordnet an einer Position zunächst dem Auslass (34B), eine Drei- Wege- Katalysatorschicht (26) aufweist, die eine größere Menge des Edelmetallkatalysators als eine Drei- Wege-Katalysatorschicht (26) eines weiteren Trägers (21A, 21B, 21C, 21E) enthält.

7. Abgasreinigungsvorrichtung nach zumindest einem der Ansprüche 1 bis 6, **dadurch gekennzeichnet, dass** jeder der Träger (21A-21F) außerdem eine Wärmeisolierungsschicht (29), hergestellt aus einem wärmeisolierenden Material, zwischen der Kohlenwasserstoff- Speicherschicht (25) und der Drei- Wege- Katalysatorschicht (26) aufweist.

8. Abgasreinigungsvorrichtung nach Anspruch 7, **dadurch gekennzeichnet, dass** ein Träger (21A), angeordnet an einer Position zunächst dem Einlass (34A), eine Wärmeisolierungsschicht (29) aufweist, die eine größere Dicke hat, als eine Wärmeisolierungsschicht (29) eines weiteren Trägers (21B-21F).

9. Abgasreinigungsvorrichtung nach zumindest einem der Ansprüche 1 bis 8, **dadurch gekennzeichnet, dass** eine relative Dicke der Kohlenwasserstoff- Speicherschicht (25) in Bezug auf eine Dicke der Drei- Wege- Katalysatorschicht (26) festgelegt ist, zuzunehmen, je mehr sich eine Position eines Trägers (21A-21F) dem Einlass(34A) nähert.

10. Abgasreinigungsvorrichtung nach zumindest einem der Ansprüche 1 bis 9, **dadurch gekennzeichnet, dass** jeder der Träger (21A-21F) aus keramischen Material hergestellt ist.

11. Abgasreinigungsvorrichtung nach zumindest einem der Ansprüche 1 bis 10, **dadurch gekennzeichnet, dass** die Kohlenwasserstoff- Speicherschicht (25) und die Drei- Wege- Katalysatorschicht (26) durch Beschichten hergestellt werden.

12. Abgasreinigungsvorrichtung nach zumindest einem der Ansprüche 1 bis 11, **dadurch gekennzeichnet, dass** eine Konzentration der Kanäle (24), gebildet in jedem der Träger (21A-21F), nicht größer als Sechshundert pro Quadratzoll einer Querschnittsfläche jedes Trägers (21A-21F) festgelegt ist.

13. Abgasreinigungsvorrichtung nach zumindest einem der Ansprüche 1 bis 12, **dadurch gekennzeichnet, dass** die Kohlenwasserstoff- Speicherschicht (25) mehr als 250 Gramm des Kohlenwasserstoff- Speichermaterials pro einem Kubikfuß des Träger (21A-21F) im Gesamtvolumen enthält.

14. Abgasreinigungsvorrichtung nach zumindest einem der Ansprüche 1 bis 13, **dadurch gekennzeichnet, dass** eine Konzentration der Kanäle (24), gebildet in einem Träger (21A), angeordnet an einer Position am nächsten zu dem Einlass (34A), geringer als eine Konzentration der Kanäle (24) ist, gebildet in einem weiteren Träger (21B-21F).

## Revendications

1. Dispositif de purification de gaz d'échappement (9) interposé dans un conduit d'évacuation (3) d'un moteur à combustion interne (1), comprenant:

   un boîtier (34) ayant une entrée (34A) et une sortie (34B) pour les gaz d'échappement, les gaz d'échappement s'écoulant dans une direction de flux de gaz d'échappement depuis l'entrée (34A) vers la sortie (34B) dans le boîtier (34); et
   une pluralité de supports (21A-21F) disposés en série, les supports (21A-21F) comprenant une couche de piégeage des hydrocarbures (25) faite d'un matériau de piégeage des hydrocarbures, une couche de catalyseur à trois voies (26) contenant un catalyseur à métal précieux, et des conduits (24) des gaz d'échappement fermés par la couche de catalyseur à trois voies (26).

   **caractérisé en ce que**
   ladite pluralité de supports (21A-21F) est séparée par un intervalle prédéterminé (G1-G5) dans le boîtier (34) et chacun des supports (21A-21F) comprend la couche de piégeage des hydrocarbures (25) et la couche de catalyseur à trois voies (26), dans lequel ladite couche de catalyseur à trois voies (26) est formée sur la couche de piégeage des hydrocarbures (25).

2. Dispositif de purification de gaz d'échappement selon la revendication 1, **caractérisé en ce qu'**un support (21A) situé à une position la plus proche de l'entrée (34A) est réglé pour avoir une dimension plus petite dans la direction du flux de gaz d'échappement qu'un autre support (21A-21F).

3. Dispositif de purification de gaz d'échappement selon la revendication 1 ou 2, **caractérisé en ce qu'**un support (21A) situé à une position la plus proche de l'entrée (34A) est réglé pour avoir une capacité thermique plus petite qu'un autre support (21B-21F).

4. Dispositif de purification de gaz d'échappement selon l'une quelconque des revendications 1 à 3, **caractérisé en ce que** le dispositif (9) comprend pas moins de trois supports (21A-21D) séparés par des intervalles (G1-G3), et un intervalle (G1) situé à une position la plus proche de l'entrée (34A) est réglé pour avoir une dimension plus grande dans la direction du flux de gaz d'échappement qu'un autre intervalle (G1-G3).

5. Dispositif de purification de gaz d'échappement selon l'une quelconque des revendications 1 à 4, **caractérisé en ce qu'**un support (21A) situé à une position la plus proche de l'entrée (34A) comprend une couche de piégeage des hydrocarbures (25A) qui a une épaisseur plus grande qu'une couche de piégeage des hydrocarbures (25A) d'un autre support (21B-21F).

6. Dispositif de purification de gaz d'échappement selon l'une quelconque des revendications 1 à 5, **caractérisé en ce qu'**un support (21D, 21F) situé à une position la plus proche de la sortie (34B) comprend une couche de catalyseur à trois voies (26) qui contient une quantité du catalyseur à métal précieux plus grande qu'une couche de catalyseur à trois voies (26) d'un autre support (21A, 21B, 21C, 21E).

7. Dispositif de purification de gaz d'échappement selon l'une quelconque des revendications 1 à 6, **caractérisé en ce que** chacun des supports (21A-21F) comprend en outre une couche d'isolation thermique (29) faite d'un matériau d'isolation thermique entre la couche de piégeage des hydrocarbures (25) et la couche de catalyseur à trois voies (26).

8. Dispositif de purification de gaz d'échappement selon la revendication 7, **caractérisé en ce qu'**un support (21A) situé à une position la plus proche de l'entrée (34A) comprend une couche d'isolation thermique (29) qui a une épaisseur plus grande qu'une couche d'isolation thermique (29) d'un autre support (21B-21F).

9. Dispositif de purification de gaz d'échappement selon l'une quelconque des revendications 1 à 8, **caractérisé en ce qu'**une épaisseur relative d'une couche de piégeage des hydrocarbures (25) par rapport à une épaisseur de la couche de catalyseur à trois voies (26) est fixée pour augmenter alors qu'un emplacement d'un support (21A-21F) approche de l'entrée (34A).

10. Dispositif de purification de gaz d'échappement selon l'une quelconque des revendications 1 à 9, **caractérisé en ce que** chacun des supports (21A-21F) est fait d'un matériau en céramique.

11. Dispositif de purification de gaz d'échappement selon l'une quelconque des revendications 1 à 10, **caractérisé en ce que** la couche de piégeage des hydrocarbures (25) et la couche de catalyseur à trois voies (26) sont formées par revêtement.

12. Dispositif de purification de gaz d'échappement selon l'une quelconque des revendications 1 à 11, **caractérisé en ce qu'**une concentration de conduits (24) formés dans chacun des supports (21A-21F) est réglée pour ne pas être supérieure à six cents par pouce carré d'une section transversale de chaque support (21A-21F).

13. Dispositif de purification de gaz d'échappement selon l'une quelconque des revendications 1 à 12, **caractérisé en ce que** la couche de piégeage des hydrocarbures (25) contient plus de 250 grammes de matériau de piégeage des hydrocarbures par mètre cube du support (21A-21F) en volume brut.

14. Dispositif de purification de gaz d'échappement selon l'une quelconque des revendications 1 à 13, **caractérisé en ce qu'**une concentration des conduits (24) formés dans un support (21A) situés à une position la plus proche de l'entrée (34A) est inférieure à une concentration des conduits (24) formés dans un autre support (21B-21F).

FIG.1

OPERATION DATA
(e.g. LOAD, ROTATION SPEED)

CONTROLLER

15

5

8    4

7

12 AIR-FUEL RATIO
SENSOR

2

9

13 AIR-FUEL RATIO
SENSOR

1

21

3

14 TEMPERATURE
SENSOR

10    11

EP 1 357 269 B1

**FIG. 2**

**FIG. 4**

21A
(21B-21D)

24 26

25

**FIG. 3**

21A
(21B-21F)

24 26

29

25

**FIG. 6**

26

24 29

21A

25

**FIG. 7**

EP 1 357 269 B1

FIG. 5

13

FIG. 8

FIG. 9